# EUROPEAN PATENT SPECIFICATION

(11) **EP 0 888 939 B1**
(45) Date of publication and mention of the grant of the patent: **02.10.2002**
(21) Application number: 98305240.8
(22) Date of filing: 01.07.1998
(51) Int. Cl.: B60R 22/34

(54) **Retractor**
Aufroller
Retracteur

(30) Priority: 04.07.1997 GB 9714167
(43) Date of publication of application: 07.01.1999
(73) Proprietor: BREED AUTOMOTIVE TECHNOLOGY, INC., Lakeland, FL 33807-3050 (US)
(72) Inventor: Martellini, Carlo, Carlisle, Cumbria CA4 9AF (GB); Blackadder, David, Carlisle, Cumbria CA4 8QG (GB); Wood, Andrew, Carlisle, Cumbria CA3 0PX (GB); Taylor, John, Penrith, Cumbria CA11 9LW (GB)
(74) Representative: Freeman, Jacqueline Carol

(56) References cited:
- WO-A-96/32303
- DE-A- 3 902 728
- FR-A- 2 190 016
- US-A- 4 273 361
- US-A- 5 511 739
- PATENT ABSTRACTS OF JAPAN vol. 097, no. 007, 31 July 1997 & JP 09 058409 A (TOKAI RIKA CO LTD), 4 March 1997

## Description

The present invention relates to a retractor for a vehicle safety restraint safety belt, and particularly to a retractor with load limiting features.

A load limiting device is advantageously incorporated into a retractor so as to allow a limited amount of belt withdrawal after the retractor has locked in an emergency situation. This limited and controlled belt withdrawal spreads the restraining force on the occupant over a period of time, albeit extremely-short, so as to reduce the danger of injury being caused to the occupant by the abrupt engagement of the restraining force which would otherwise occur. This is particularly important in high velocity impacts.

One known way of incorporating load limiting means in a retractor is to use a torsion bar or rod which is connected between the seat belt winding shaft and the retractor locking element. Under predetermined loading conditions, this torsion bar twists and allows a limited but controlled pay-out of the seat belt webbing under particularly high tension forces (for example high velocity impacts). Torsion bars for load limiting in retractors are well known and are described for example in US 3,741,494 to Fiala.

However a disadvantage with many known torsion bar systems is that the loads are reduced too far. It is advantageous to allow relatively high loads at the beginning of the crash pulse and to allow load limiting to take effect shortly after. The passenger must be securely restrained at the first indication of the onset of a crash situation so it is important that the torsion bar does not twist immediately. In WO 96/32303 to Autoliv Development AB there is described a retractor which uses shear elements to keep the initial load high. However shear elements have disadvantages in that once they have sheared they are loose pieces of metal which can cause damage and prevent the correct operation of the retractor. In addition they cause a peak in the loading which subsequently reduces considerably after shearing.

Japanese patent document 09058409 to Tokai Rika Co Ltd also discloses a retractor arrangement with load limiting in accordance with the preamble of claim 1.

It is an object of the present invention to provide an improved retractor having load limiting features.

According to the present invention there is provided a retractor for a vehicle safety restraint the retractor comprising:
seat belt webbing,
a spool (1) mounted for rotation about a shaft (2) to wind up or pay-out the seat belt webbing,
a sensor (5) for detecting a crash condition,
means, in response to the sensor (5), for locking the spool against rotation in a webbing pay-out direction,
load limiting means (3) arranged in the force path between the retractor spool and the locking means,
means for determining the threshold at which the load limiting means (3) becomes operable,
wherein the threshold determining means comprises a pin (4) arranged to urge the spool (1) into frictional force-fit engagement with the shaft (2), the pin (4) being of a denser material than the shaft (9), so that under predetermined force conditions, when the torque on the spool (1) exceeds the frictional force between the spool (1) and the shaft (9) then the pin (4) cuts a channel or groove (5) around the periphery of the shaft (2), characterised in that the pin is of a U-shaped form with one arm of the U-shape arranged to grip on each side of the shaft.

Preferably the shaft is keyed to receive the ends of the pins in small indentations to start the channel or groove.

It will be seen that as the relative torque between the spool and the shaft increases above the predetermined level sufficient to overcome the gripping force of the pin, and the friction between the pin and the shaft cuts the groove in the shaft, then the friction between the pin and the shaft decreases as the groove gets deeper. Hence the pin determines a predetermined threshold torque below which the full force of the belt is applied to the vehicle occupant and above which pay-out of the belt to a limited and controlled extent is allowed which decreases in a gradual way the force felt by the occupant. In the prior art WO 96/32303, the decrease in the force felt by the occupant is a sudden, stepped, decrease rather than a gradual curved decrease. A sudden stepped decrease is undesirable since it is disconcerting and uncomfortable for the occupant, and does not give the ideal restraining curve. In contrast, the present invention gives a much improved generally constant force curve.

In one embodiment the pin is formed of hardened steel and the shaft and spool of aluminium.

The present invention provides a relatively simple, easy to fit and cost effective means of improving the force curve in a load limiting retractor. Specifically the initial force needed to switch in the load limiting is increased and a high load is maintained at a generally constant level. In addition, the present invention provides means of holding together the shaft and the spool both in a pre-crash condition and in the load bearing condition.

For a better understanding of the present invention and to show how the same may be carried into effect, reference will now be made to the accompanying drawings in which:
Figure 1 is a cross-sectional view through a retractor according to the present invention.
Figure 2 is an exploded perspective view in sketch form of part of the retractor of Figure 1.
Figure 3 are graphs showing belt extension and frame force against time for the retractor of the invention.
Figure 4 is a typical graph of force against time for the prior art system.

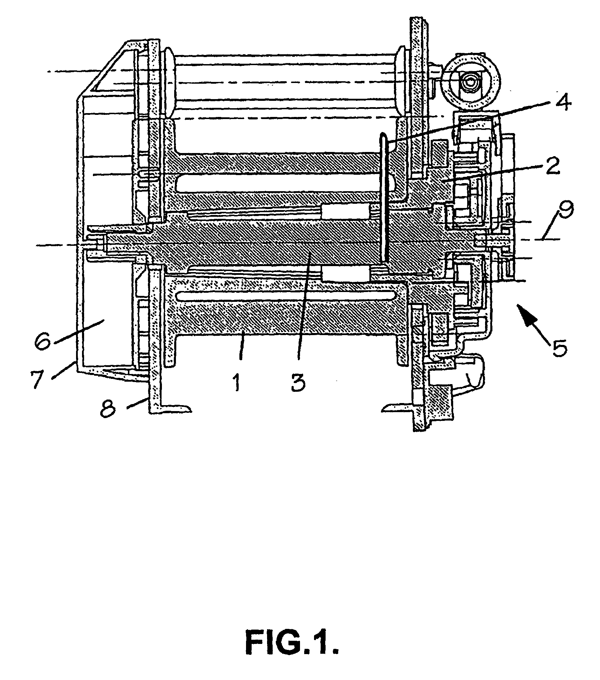

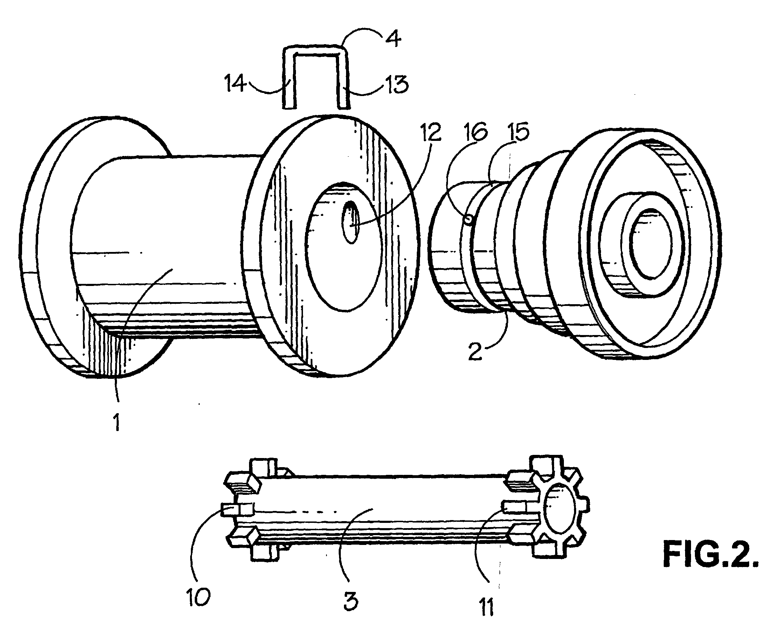

In Figure 1 the retractor spool is shown at 1 and this is mounted for rotation about axis 9 and is connected to an end piece 2. A torsion bar 3 is connected at one end to the spool 1 and at the other end to the end piece 2. The spool 1 and the end piece 2 are held together by friction applied by a pin 4 which passes through a hole in the spool and tightly abuts against the periphery of that portion of end piece 2 which is located within the spool 1. This pin is a double pin or U-shaped pin as shown in Figure 2 and the arms pass either side of the end piece to grip it. It is preferably made of hardened steel. The spool 1 and end piece 2 are made of aluminium in this example. The ends of the arms of the pin fit into respective indentations on the circumference of the end piece 2. Thus the pin holds the spool to the end piece under normal pre-crash conditions.

Sensing and locking means for detecting a crash and locking the end piece 2 and thus the spool 1 in response thereto are located at one end of the retractor and are indicated at 5. These are of known form and are well understood by persons skilled in the art. The retractor spring in the form of a clock spring, to bias the spool in a webbing rewind direction, is located at the other end of the retractor in aperture 6 and covered by spring cover 7. A frame 8 supports the assembly for rotation about axis 9, again in known manner.

In Figure 2 like items are denoted by like reference numerals. Figure 2 is a sketch form of the arrangement, in perspective view.

It can be seen that the torsion bar 3 has profiled ends 10 and 11 which fit in corresponding inverted profiles in one end of the spool 1 and in end piece 2 respectively. Pin 4 is shown in a U-shaped form with two arms each of which pass through a hole (not shown) in the spool 1. A recess 12 is shown on the inside surface of the spool 1 to locate the end of the right hand arm 13 of the pin 4. A corresponding recess is arranged for the end of the left hand arm 14 of pin 4 but is not visible in the view shown in Figure 2. Similarly indentations 16 on each side of the end piece 2 locate the ends of the pin arms 13, 14.

When a predetermined torque is applied between the spool 1 and the end piece 2, above a threshold determined by the friction grip of the pin 4 on the end piece 2, relative rotation takes place and the arms 13 and 14 of pin 4 ride out of indentations 16 and rub against the circumference of the end piece 2 as the spool rotates, to form a groove 15 around the whole circumference. The friction grip of the pin still holds the spool and end piece together. In this way the pin performs a dual function, holding the parts together and providing load limiting.

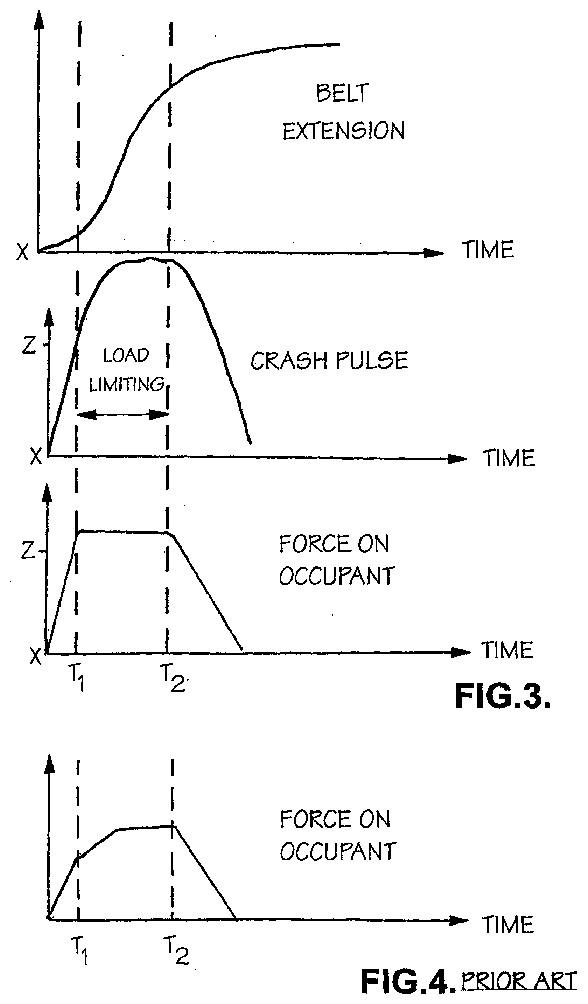

Figure 3 illustrates the improved force extension curve produced with the retractor of this invention. At the origin X, at the onset of crash conditions the force felt by the occupant rises quickly with very little belt extension so as to satisfactorily restrain the occupant early in the crash pulse. At time T₁ a predetermined force Z, dependent upon the geometry and relative hardness of the pin and the shaft, is reached and the shaft begins to rotate against the retaining force of the pin and the force curve flattens out and remains substantially constant as the pin wears the groove in the shaft. At this time the force of the crash pulse is being transferred to the torsion bar which begins to take the strain and take up some of the load. The length of seat belt webbing paid out increases rapidly as shown in the top graph curve of Figure 3. As the groove 15 is cut deeper, the friction exerted by the pin gradually decreases and the proportion of force transferred to the torsion bar increases. Once the groove is fully cut, the friction imparted by the pin is at a minimum and almost all of the force is taken by the torsion bar 3. The torsion bar twists until its load limiting capacity is reached at T₂ at which stage no further extension of the belt is possible and the occupant is securely restrained. This corresponds to the flattening of the belt extension graph in the upper part of Figure 3. By this time the crash pulse is dissipating as shown by the decrease in the crash pulse shown in the middle graph of Figure 3 and load limiting is no longer required.

Figure 4 illustrates the typical force curve for the prior art arrangement using shear pins and it can be clearly seen that this does not raise the initial force as quickly as in the present invention.

## Claims

1. A retractor for a vehicle safety restraint the retractor comprising:
seat belt webbing,
a spool (1) mounted for rotation about a shaft (2) to wind up or pay-out the seat belt webbing,
a sensor (5) for detecting a crash condition,
means, in response to the sensor (5), for locking the spool against rotation in a webbing pay-out direction,
load limiting means (3) arranged in the force path between the retractor spool and the locking means,
means for determining the threshold at which the load limiting means (3) becomes operable,
**characterised in that** the threshold determining means comprises a pin (4) arranged to urge the spool (1) into frictional force-fit engagement with the shaft (2), the pin (4) being of a denser material than the shaft (9), so that under predetermined force conditions, when the torque on the spool (1) exceeds the frictional force between the spool (1) and the shaft (9) then the pin (4) cuts a channel or groove (5) around the periphery of the shaft (2), the pin being of a U-shaped form with one arm of the U-shape arranged to grip on each side of the shaft.

2. A retractor according to claim 1 wherein the shaft (2) is keyed to receive the ends of the pin (4) in a small indentation to start the channel or groove (15).

3. A retractor according to any preceding claim which presents a generally constant force curve to the vehicle occupant.

4. A retractor according to any preceding claim wherein the pin (4) is formed of hardened steel and the shaft (2) and spool (1) are each formed of aluminium.

## Patentansprüche

1. Aufrollvorrichtung für eine Fahrzeugsicherheitsrückhaltevorrichtung, wobei die Aufrollvorrichtung aufweist:
Sicherheitsgurtband;
eine Trommel (1), die für eine Drehung um eine Welle (2) montiert ist, um das Sicherheitsgurtband aufzuwickeln oder nachzulassen;
einen Meßfühler (5) für das Nachweisen eines Zusammenstoßes;
eine Einrichtung für das Sperren der Trommel gegen eine Drehung in einer Gurtbandnachlaßrichtung als Reaktion auf den Meßfühler (5);
eine Lastbegrenzungseinrichtung (3), die im Kraftweg zwischen der Aufrollvorrichtungstrommel und der Sperreinrichtung angeordnet ist;
eine Einrichtung für das Ermitteln des Grenzwertes, bei dem die Lastbegrenzungseinrichtung (3) arbeitsfähig wird;
**dadurch gekennzeichnet, daß** die Einrichtung für das Ermitteln des Grenzwertes einen Bolzen (4) aufweist, der angeordnet ist, um die Trommel (1) in einen Reibungspreßpassungseingriff mit der Welle (2) zu treiben, wobei der Bolzen (4) aus einem dichteren Material besteht als die Welle (9), so daß unter vorgegebenen Kraftbedingungen, wenn das Drehmoment an der Trommel (1) die Reibungskraft zwischen der Trommel (1) und der Welle (9) übersteigt, der Bolzen (4) dann einen Kanal oder eine Nut (15) um den Umfang der Welle (2) herum einschneidet, wobei der Bolzen eine U-Form aufweist, so angeordnet, daß ein Arm der U-Form auf jeder Seite der Welle eingreift.

2. Aufrollvorrichtung nach Anspruch 1, bei der die Welle (2) verkeilt ist, um die Enden des Bolzens (4) in einer kleinen Vertiefung aufzunehmen, um den Kanal oder die Nut (15) zu beginnen.

3. Aufrollvorrichtung nach vorhergehenden Ansprüchen, die eine im allgemeinen konstante Kraftkurve für den Fahrzeuginsassen vorlegt.

4. Aufrollvorrichtung nach vorhergehenden Ansprüchen, bei der der Bolzen (4) aus gehärtetem Stahl gebildet wird, und die Welle (2) und die Trommel (1) jeweils aus Aluminium gebildet werden.

## Revendications

1. Enrouleur pour un dispositif de retenue de sécurité d'un véhicule, l'enrouleur comprenant:
une sangle de la ceinture;
une bobine (1) montée de sorte à pouvoir tourner autour d'un arbre (2) pour enrouler ou dérouler la sangle de la ceinture,
un capteur (5) destiné à détecter un état de collision,
un moyen sensible au capteur (5) destiné à verrouiller la bobine contre une rotation dans la direction du déroulement de la sangle,
un moyen de limitation de la charge (3) agencé dans la trajectoire de force entre la bobine de l'enrouleur et le moyen de verrouillage,
un moyen pour déterminer le seuil en présence duquel le moyen de limitation de la charge (3) est actionné,
**caractérisé en ce que** le moyen de détermination du seuil comprend une goupille (4) destinée à entraîner un engagement serré par frottement de la bobine (1) dans l'arbre (2), la goupille (4) étant composée d'un matériau plus dense que l'arbre (9), de sorte qu'en présence de conditions de force prédéterminées, le couple exercé sur la bobine (1) étant supérieur à la force de frottement entre la bobine (1) et l'arbre (9), la goupille (4) découpe un canal ou une rainure (15) autour de la périphérie de l'arbre (2), la goupille avant une forme en U, un bras de la forme en U étant agencé de sorte à saisir chaque côté de l'arbre.

2. Enrouleur selon la revendication 1, dans lequel l'arbre (2) est claveté pour recevoir les extrémités de la goupille (4) dans une petite entaille pour commencer la formation du canal ou de la rainure (15).

3. Enrouleur selon l'une quelconque des revendications précédentes, présentant une courbe de force généralement constante à l'occupant du véhicule.

4. Enrouleur selon l'une quelconque des revendications précédentes, dans lequel la goupille (4) est composée d'acier trempé, l'arbre (2) et la bobine (1) étant chacun composés d'aluminium.
